# EUROPÄISCHE PATENTANMELDUNG

(11) **EP 4 582 639 A1**
(43) Veröffentlichungstag der Anmeldung: **09.07.2025**
(21) Anmeldenummer: 24221368.4
(22) Anmeldetag: 19.12.2024
(51) Int. Cl.: E02F 9/26, B60W 30/09

(54) **SYSTEM UND VERFAHREN ZUR VERBESSERTEN KOLLISIONSVERMEIDUNG**

(30) Priorität: 04.01.2024 DE 102024200073
(71) Anmelder: Robert Bosch GmbH, 70442 Stuttgart (DE)
(72) Erfinder: Bender, Frank, 70190 Stuttgart (DE); Glogger, Simon, 89284 Pfaffenhofen (DE); Schmid, Marc, 73345 Hohenstadt (DE)

(57) **Zusammenfassung**

Die Erfindung betrifft ein Verfahren zur Vermeidung einer Kollision der mobilen Maschine mit einem externen Objekt (99), wobei die mobile Maschine mindestens einen ersten Umfeldsensor (S1) umfasst, der auf einer mobilen Maschine (1) positioniert ist und der für die Funktion für die Vermeidung einer Kollision der mobilen Maschine mit einem externen Objekt (99) angewendet wird, wobei das Verfahren folgende Schritte umfasst:
a. Ermittlung einer Relativposition zwischen der mobilen Maschine und dem Objekt (99)
b. Ermittlung einer Relativbewegung zwischen der mobilen Maschine und dem Objekt (99) und
c. Berechnung einer Soll-Verzögerung der mobilen Maschine auf Basis der im Schritt a. ermittelten Relativposition und der im Schritt b. ermittelten Relativbewegung;
d. Steuern oder Regeln der Verzögerung der mobilen Maschine auf Basis der im Schritt c. berechnetet Soll-Verzögerung;
e. Erfassen eines Ist-Wertes mindestens einer physikalischen Größe, der sich wegen der Steuerung oder Regelung vom Schritt d. verändert hat;
f. Anpassung der Steuerung der mobilen Maschine oder der Regelung der mobilen Maschine auf Basis des im Schritt e. erfassten Ist-Wertes.

## Beschreibung

Kollisionen von mobilen Arbeitsmaschinen mit anderen Objekten stellen eine ernsthafte Gefahr sowohl für die Menschen, die sie bedienen, als auch für die Maschinen selbst dar. Besonders in Situationen mit eingeschränkter Sicht, beispielsweise wenn ein Radlader mit einer beladenen Schaufel oder ein Dumper mit einer gefüllten Mulde unterwegs ist, besteht die Gefahr schwerwiegender Unfälle. Es gibt bereits bekannte Systeme, die darauf abzielen, solche Kollisionen zu vermeiden oder ihre Auswirkungen zu minimieren. Diese Systeme umfassen Rückfahrkameras, Bird-Eye-View-Kameras für eine verbesserte Rundumsicht und verschiedene Warn- und Vermeidungssysteme, die auf Kamera-, Ultraschall-, Radar- oder Lidar-Technologie basieren. Sie agieren als Assistenzsysteme, um die Sicherheit im Betrieb dieser Maschinen zu erhöhen.

Wenn es um Systeme geht, die auf Umfeldsensorik wie Radar basieren, erkennen die Sensoren Hindernisse wie Personen, andere Fahrzeuge oder Wände. Diese bekannten Systeme berechnen dann anhand der übermittelten Daten, wie Abstand und Relativgeschwindigkeit des erkannten Objekts, eine "time-to-collision" sowie einen kritischen Abstand, bei dessen Unterschreitung eine Warnung ausgegeben werden sollte - hierbei bleibt genug Zeit für den Fahrer, manuell zu bremsen. Ebenso wird ein Abstand ermittelt, bei dessen Unterschreitung ein automatischer Brems- oder Verzögerungseingriff ausgelöst werden soll.

Ähnliche Systeme sind bereits im Automobilbereich etabliert und können mit angepassten Konfigurationen auch bei mobilen Arbeitsmaschinen eingesetzt werden. Die Umsetzung dieser Systeme beinhaltet in der Regel einen oder mehrere Sensoren wie beispielsweise Radar, Inertialsensoren zur Übermittlung der eigenen Bewegungen (Gierraten) an die entsprechenden Radarsensoren sowie eine Steuereinheit zur Auswertung der vom Sensor erfassten Objekte und zur Berechnung der relevanten Größen, die für das Auslösen von Warnungen oder Eingriffen relevant sind.

Diese Systeme sind ein wichtiger Schritt, um die Sicherheit im Betrieb mobiler Arbeitsmaschinen zu verbessern und tragen dazu bei, Unfälle zu vermeiden oder zumindest ihre Schwere zu verringern.

In Systemen zur Kollisionsvermeidung mit aktivem Eingriff in den Fahrantrieb wird eine gezielte Verzögerung des Fahrzeugs eingeleitet, um sicherzustellen, dass das Fahrzeug vor dem erkannten Hindernis zum Stillstand kommt. Diese Verzögerung kann durch verschiedene Mechanismen realisiert werden, wie beispielsweise durch den Einsatz des hydrostatischen Fahrantriebs (durch das Verschwenken von Pumpe und/oder Motor) oder durch Anwendung der Betriebsbremse. Bei der Entwicklung des Algorithmus zur Kollisionsvermeidung ist es notwendig, Annahmen über das Verzögerungsverhalten zu treffen, um den Eingriff rechtzeitig auszulösen.

Die Annahmen über das Verzögerungsverhalten basieren auf einer Vielzahl von Faktoren, darunter der Abstand zum Hindernis, die Relativgeschwindigkeit zwischen Hindernis und Fahrzeug sowie die Beschaffenheit der Fahrbahn. Die Berechnung des Zeitpunkts, zu dem die Verzögerung oder Bremsung eingeleitet werden muss, ist entscheidend, um sicherzustellen, dass das Fahrzeug rechtzeitig zum Stillstand kommt. Die Herausforderung besteht darin, dass die reale Verzögerung von der in der Berechnung verwendeten Verzögerung abweichen kann, insbesondere wenn vereinfachte Modelle, wie etwa eine konstante Verzögerung über den gesamten Bremsweg, verwendet werden.

Ein zusätzliches Problem liegt in der Praxis vor, wo unbekannte Störgrößen auftreten können. Beispielsweise können eine unbekannte Fahrbahnsteigung, zusätzliche Last durch Zuladung oder variierende Reibungseigenschaften zwischen Rädern und Untergrund die tatsächliche Verzögerung beeinflussen. Daher müssen bei der Entwicklung von Kollisionsvermeidungssystemen Maßnahmen ergriffen werden, um sicherzustellen, dass das Fahrzeug trotz solcher Störgrößen rechtzeitig gestoppt wird.

Die Teilprobleme, die sich in diesem Zusammenhang ergeben, umfassen:
I. Sicherstellung einer rechtzeitigen Verzögerung: Es ist sicherzustellen, dass selbst bei vereinfachten Annahmen zur Fahrzeugverzögerung das Fahrzeug rechtzeitig vor dem Hindernis stoppt. Dies erfordert präzise Berechnungen und Anpassungen in Echtzeit.
II. Kompensation von Störgrößen und unbekannten Modellparametern: Um unvorhersehbare Faktoren wie Fahrbahnsteigung, Zuladung und Reibung zu berücksichtigen, müssen Mechanismen implementiert werden, die diese Störgrößen erkennen und kompensieren, um das rechtzeitige Anhalten des Fahrzeugs zu gewährleisten.

Die Hauptaufgabe besteht also darin, eine Lösung für die zwei beschriebenen Teilprobleme zu finden.

### KURZFASSUNG

Gemäß einer Ausführungsform der vorliegenden Erfindung wird ein Verfahren zur Vermeidung einer Kollision der mobilen Maschine mit einem externen Objekt (99) beansprucht, wobei die mobile Maschine mindestens einen ersten Umfeldsensor (S1) umfasst, der auf einer mobilen Maschine (1) positioniert ist und der für die Funktion für die Vermeidung einer Kollision der mobilen Maschine mit einem externen Objekt (99) angewendet wird, wobei das Verfahren folgende Schritte umfasst:
a. Ermittlung einer Relativposition zwischen der mobilen Maschine und dem Objekt (99)
b. Ermittlung einer Relativbewegung zwischen der mobilen Maschine und dem Objekt (99) und
c. Berechnung einer Soll-Verzögerung der mobilen Maschine auf Basis der im Schritt a. ermittelten Relativposition und der im Schritt b. ermittelten Relativbewegung;
d. Steuern oder Regeln der Verzögerung der mobilen Maschine auf Basis der im Schritt c. berechnetet Soll-Verzögerung;
e. Erfassen eines Ist-Wertes mindestens einer physikalischen Größe, der sich wegen der Steuerung oder Regelung vom Schritt d. verändert hat;
f. Anpassung der Steuerung der mobilen Maschine oder der Regelung der mobilen Maschine auf Basis des im Schritt e. erfassten Ist-Wertes.

Es ist klar, dass die Schritte c. bis f. vorzugsweise ausgeführt werden, nachdem festgestellt wird, dass ein Eingriff in die Steuerung der mobilen Maschine stattfinden soll, um eine Kollision zu vermeiden (d.h. die Funktion zur Kollisionsvermeidung greift direkt in den Fahrantrieb der mobilen Maschine ein). Es ist für die Erfindung nicht relevant, ob eine Steuerung oder Regelung der Verzögerung stattfinden wird. Die Kernidee besteht darin, dass ein Ist-Wert mindestens einer physikalischen Größe, der sich wegen der Steuerung oder Regelung vom Schritt d. verändert hat, erfasst wird. Durch diese Erfassung kann entweder eine Regelung der Verzögerung oder eine Anpassung der Steuerung ausgeführt werden (mit einem ähnlichen Ergebnis).

### KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:
Figur 1 zeigt einen Radlader als Beispiel für eine mobile Maschine;
Figur 2 zeigt eine schematische Darstellung einer mobilen Maschine mit Umfeldsensoren;
Figur 3 zeigt ein Verfahren zur Vermeidung einer Kollision der mobilen Maschine mit einem externen Objekt gemäß dem Stand der Technik;
Figur 4 zeigt ein Verfahren zur Vermeidung einer Kollision der mobilen Maschine mit einem externen Objekt gemäß einer ersten Ausführungsform der vorliegenden Erfindung;
Figur 5 zeigt ein Blockschaltbild für eine Kollisionsvermeidungsfunktion einer mobilen Maschine gemäß der ersten Ausführungsform der vorliegenden Erfindung;
Figur 6 zeigt ein Blockschaltbild für eine Kollisionsvermeidungsfunktion einer mobilen Maschine gemäß einer zweiten Ausführungsform der vorliegenden Erfindung.

### DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

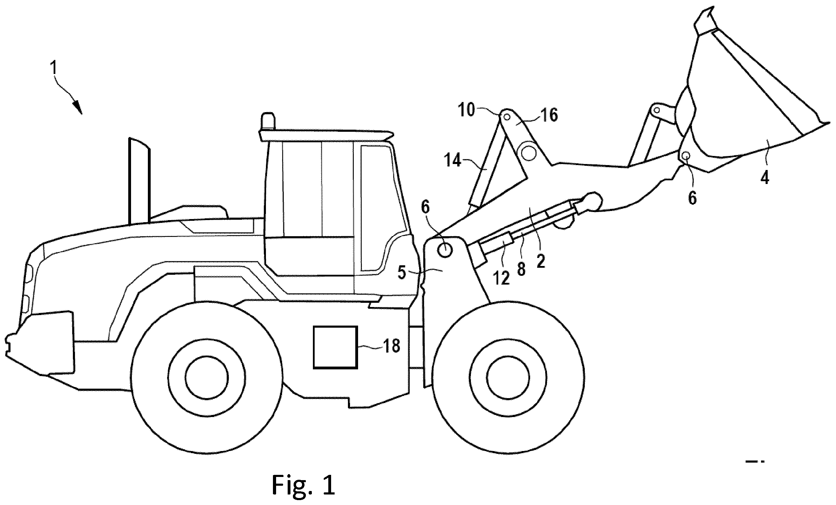

Figur 1 zeigt einen Radlader 1 als Beispiel für eine Arbeitsmaschine. Es wird aber höflichst darauf hingewiesen, dass die vorliegende Erfindung auch in anderen Bereichen, wie im Automotive Bereich, angewendet werden kann und daher die Anwendung nicht ausschließlich bei einer mobilen Arbeitsmaschine zu finden ist. Darüber hinaus stellt der Radlader nur ein Beispiel einer mobilen Arbeitsmaschine dar. Es ist nicht notwendig, dass die mobile Arbeitsmaschine eine Arbeitskinematik, wie bei dem Radlader, umfasst.

Der Radlader 1 weist einen Ausleger auf, der wiederum mehrere Auslegerelemente aufweist, um Lasten aufzunehmen. Die Auslegerelemente sind hier beispielhaft ein Hubarm 2 (auch als "Auslegerarm" bekannt) und eine Schaufel 4, die miteinander bzw. mit einem Auslegerträger 5 (z.B. Fahrgestell) des Radladers 1 mittels Achsen 6 drehbar bzw. schwenkbar verbunden sind. Die Auslegerelemente 2, 4 sind mittels Aktuatoren 8, 10 bewegbar, d.h. die Dreh- bzw. Schwenkbewegung um die Achsen wird durch eine Bewegung der Aktuatoren bewirkt.

Es ist ein erster Aktuator 8 für den Hubarm 2 vorgesehen, der die Bewegung bzw. Drehung des Hubarms 2 relativ zum Auslegerträger 5 bewirkt. Ebenso ist ein zweiter Aktuator 10 für die Schaufel 4 vorgesehen, der die Schaufel 4 bewegt bzw. dreht (kippt). Die Aktuatoren umfassen insbesondere Hydraulikzylinder 12, 14, d.h. einen ersten Hydraulikzylinder 12 des ersten Aktuators 8 und einen zweiten Hydraulikzylinder 14 des zweiten Aktuators 10. Die Bewegung der Schaufel 4 wird über ein Gestänge 16 übertragen bzw. angelenkt, das als Komponente des Aktuators 10 der Schaufel 4 angesehen werden kann.

Die Aktuatoren 8, 10 können durch eine Steuerung 18 angesteuert werden, wobei im Falle von Hydraulikzylindern 12,14 Wegeventile vorgesehen sind, die den Fluss von Hydraulikflüssigkeit zu den Hydraulikzylindern steuern.

Die mobile Arbeitsmaschine 1 umfasst eine Mehrzahl von Rädern, die eine Bewegung der mobilen Arbeitsmaschine ermöglichen. Durch die Bewegung können Kollisionen zwischen der mobilen Arbeitsmaschine und externen Objekten (wie z.B. eine andere mobile Arbeitsmaschine oder ein Baum) entstehen. Solche Kollisionen stellen eine ernsthafte Gefahr sowohl für die Menschen, die sie bedienen, als auch für die Maschinen selbst dar. Um eine solche Gefahr zu vermeiden, werden generell Kollisionsvermeidungsfunktionen benutzt.

In einer solchen Funktion werden generell Umfeldsensoren (Radarsensoren, Ultraschallsensoren, Kameras und Lidar) ihre Umgebung erfassen und erkennen Hindernisse, andere Fahrzeuge oder Personen in der Nähe. Die erfassten Daten werden dann von einem Steuerungssystem analysiert, um potenzielle Kollisionen zu erkennen. Sobald potenzielle Kollisionsgefahren erkannt werden, kann die Maschine Warnungen oder Alarme auslösen. Diese können visuell über Bildschirme oder LED-Anzeigen, akustisch über Warntöne oder durch Vibrationen im Inneren des Fahrzeugs erfolgen, um den Fahrer oder die Bediener zu alarmieren. Fortgeschrittene Systeme können automatische Notbremsungen aktivieren oder die Geschwindigkeit reduzieren, um Kollisionen zu vermeiden. Diese Systeme können in der Lage sein, selbstständig zu handeln, um die Maschine zu stoppen oder zu verlangsamen, wenn die Gefahr einer Kollision besteht. Einige mobile Maschinen sind mit Fahrerassistenzsystemen ausgestattet, die dem Fahrer dabei helfen, Kollisionen zu vermeiden. Diese Systeme können Lenkungsunterstützung, Spurhalteassistenten, adaptive Geschwindigkeitsregelung und andere Funktionen umfassen, um sicherzustellen, dass die Maschine sicher und ohne Kollisionen betrieben wird. Durch die Einrichtung von Zonen oder Bereichen, in denen die Maschine sicher arbeiten kann, und der Implementierung von Zonenerkennungssystemen kann die Maschine so programmiert werden, dass sie in bestimmten Bereichen bestimmte Aktionen ausführt oder ihre Geschwindigkeit anpasst.

Die genaue Implementierung dieser Maßnahmen hängt von der Art der Maschine, ihren Einsatzzwecken und den Sicherheitsstandards ab. Eine Kombination verschiedener Technologien und Systeme bietet in der Regel die zuverlässigste Kollisionsvermeidung für mobile Maschinen.

Es wird in dieser Beschreibung auf eine detaillierte Beschreibung einer Kollisionsvermeidungsfunktion verzichtet, da das Verfahren der vorliegenden Erfindung Anwendung bei einer beliebigen Kollisionsvermeidungsfunktion finden kann.

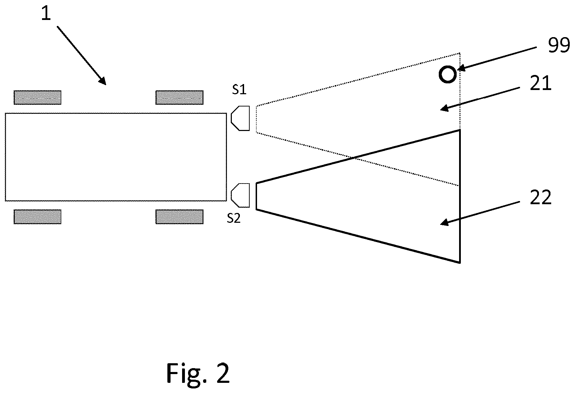

Aus diesem Grund umfasst die mobile Arbeitsmaschine (wie in Figur 2 dargestellt) einen ersten Umfeldsensor S1 und vorzugsweise einen zweiten Umfeldsensor S2, um das Sichtfeld zu erweitern. Die Umfeldsensoren sind Teil einer Umfeldsensorik der mobilen Maschine. Die Umfeldsensoren müssen nicht unbedingt von der gleichen Art von Umfeldsensoren sein. Bekannte Arten von Umfeldsensoren sind z.B. Kamera-, Radar-, Ultraschall- oder Lidarbasierte Sensoren. Z.B. könnte der erste Umfeldsensor S1 eine Kamera und der zweite Umfeldsensor ein Radar sein.

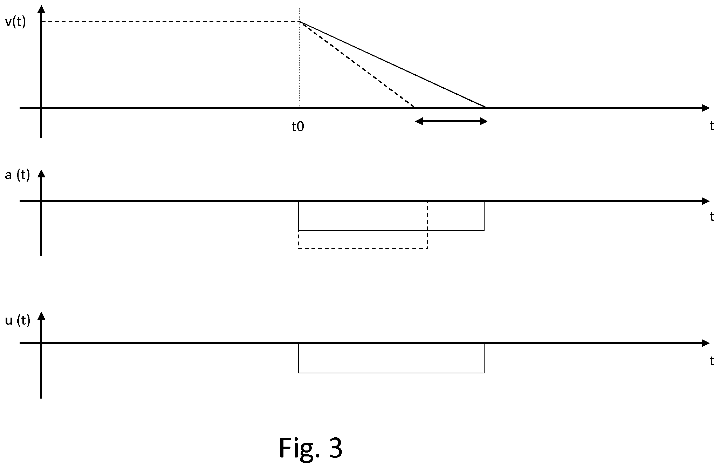

Mit Bezug auf die Figur 3 wird nun das Problem des Standes der Technik im Detail beschrieben, das in der Einführung der vorliegenden Erfindung bereits grob erläutert wurde.

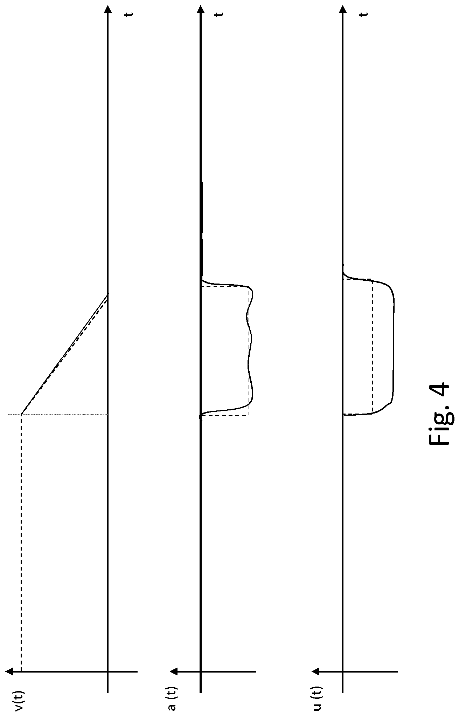

Sowohl die Figur 3 als auch die Figur 4 sind in drei Abschnitte geteilt. In dem oberen Abschnitt wird ein Zeitverlauf v(t) der Ist-Geschwindigkeit (kontinuierliche Linie) und der Soll-Geschwindigkeit (gestrichelte Linie) der mobilen Maschine dargestellt. In dem zentralen Abschnitt wird ein Zeitverlauf a(t) der Ist-Verzögerung (kontinuierliche Linie) und der Soll-Verzögerung (gestrichelte Linie) der mobilen Maschine dargestellt. In dem unteren Abschnitt wird nur der Zeitverlauf einer Stellgröße (z.B. Ansteuerung Bremse) gemäß der Soll-Verzögerung der mobilen Maschine dargestellt.

Wie in Figur 3 dargestellt ist, wird an dem Zeitpunkt t0 festgestellt, dass die mobile Maschine verzögert werden soll, um eine Kollision zu vermeiden. Insbesondere wird kurz vor der Zeit t0 eine Soll-Verzögerung berechnet und ab der Zeit t0 soll durch einen automatischen Eingriff in die Verzögerung der mobilen Maschine basierend auf der vorhergesagten Soll-Verzögerung verzögert werden.

Wie in dem zentralen Abschnitt von Figur 3 dargestellt ist, gibt es in vielen Fällen eine Abweichung zwischen der Soll-Verzögerung und der Ist-Verzögerung der mobilen Maschine: d.h. dass die vom System vorhergesagte Soll-Verzögerung von der tatsächlich auftretenden Verzögerung abweicht. Der Grund dafür ist, dass durch die Änderung von vorher nicht vorhersagbaren Bedingungen, wie z.B. eine Fahrbahnsteigung oder Zuladung, eine gegenüber der Vorhersage reduzierte Verzögerung stattfindet. Mit dem Pfeil in dem oberen Abschnitt von Figur 3 ist die zusätzliche Zeit gemeint, die die mobile Maschine entgegen der Vorhersage bis zum Stillstand benötigt wird, was natürlich auch eine entsprechend längere Strecke verursachen wird.

Es könnte auch passieren, dass die mobile Maschine doch früher als vorhergesagt zum Stillstand kommt. Ein solches Verhalten sollte auch verhindert werden, da eine unnötige Abbremsung der mobilen Maschine stattfinden würde. Das wäre dann der Fall, wenn in Figur 3 mit der gestrichelten Linie das Ist-Verhalten und mit der kontinuierlichen Linie das SollVerhalten darstellen würden (d.h. die Linien von Figur 3 wären umgekehrt). Aus diesem Grund wird in Figur 4 ein Verfahren nach einer ersten Ausführungsform der vorliegenden Erfindung dargestellt. Der Hauptunterschied gegenüber dem Stand der Technik ist, dass zusätzlich eine Regelung der Verzögerung stattfindet. Durch diese Regelung wird tatsächlich ermöglicht, dass eine sichere Verzögerung der mobilen Maschine erfolgt.

Wie in Figur 4 zu sehen ist, wird durch die Regelung möglich sein, den Soll-Verlauf der Fahrgeschwindigkeit (oberer Abschnitt von Figur 4) zu folgen.

Es wird darauf hingewiesen, dass nicht notwendig ist, dass tatsächlich eine kontinuierliche Regelung der Verzögerung der mobilen Maschine stattfindet. Wie auch klarer aus der Beschreibung von der zweiten Ausführungsform der vorliegenden Erfindung hervorgehen wird, liegt der Kern der Erfindung darin, dass ein Ist-Wert mindestens einer physikalischen Größe, der sich wegen der Verzögerung verändert hat, erfasst wird und das Bremsverhalten auf Basis des erfassten Ist-Wertes weiter ausgeführt wird.

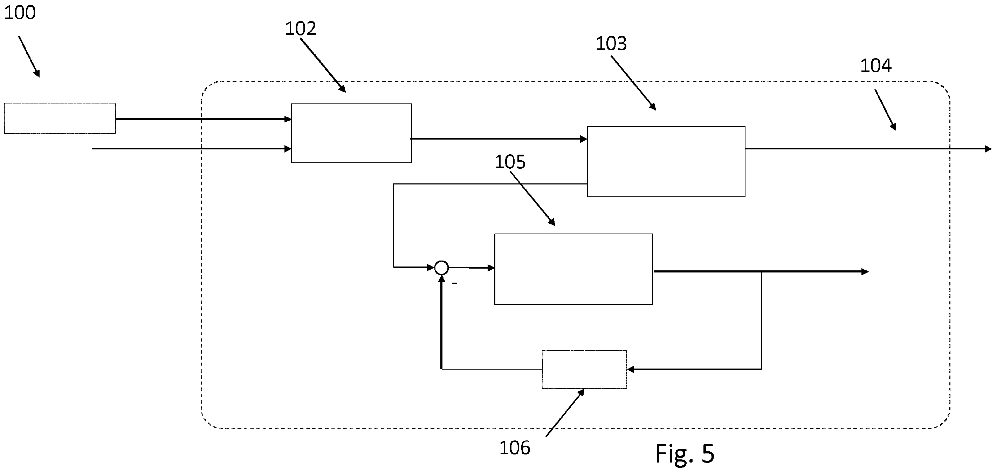

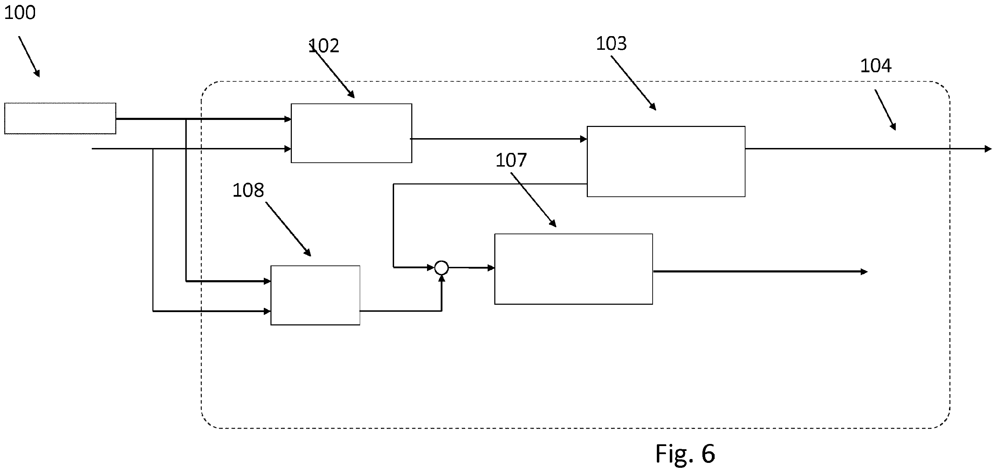

Mit Bezug nun auf die Figuren 5 und 6 werden nun die Logiken der zwei Hauptausführungsformen der vorliegenden Erfindung erläutert.

Figur 5 stellt ein Blockschaltbild eines Verfahrens zur Vermeidung einer Kollision der mobilen Maschine mit einem externen Objekt gemäß der ersten Ausführungsform der vorliegenden Erfindung dar.

In einem ersten Schritt 100 wird durch die Umfeldsensoren S1 und S2 eine Position und vorzugsweise eine Geschwindigkeit des externen Objektes ermittelt. In dem Schritt 102 wird weiterhin unter Verwendung der Information der Eigenbewegung der mobilen Maschine eine Relativbewegung zwischen der mobilen Maschine und dem externen Objekt 99 ermittelt.

In einem weiteren Schritt 103 wird dann festgestellt, ob die mobile Maschine tatsächlich auf Basis der Funktion zur Kollisionsvermeidung verzögert werden soll. Das bedeutet, dass in diesem Schritt 103 festgestellt wird, wann der Zeitpunkt t0 von den Figuren 3 und 4 ist und die Soll-Verzögerung der mobilen Maschine auf Basis der ermittelten Relativposition und der ermittelten Relativbewegung berechnet wird. Die Information wird dann an die Regelung der Verzögerung weitergegeben.

Für den Fall, dass im Schritt 103 festgestellt wird, dass der Zeitpunkt t0 gekommen ist und deswegen, die Kollisionsvermeidungsfunktion eingreifen soll, wird vorzugsweise eine Ausgabe erzeugt, z.B. durch eine Human Machine Interface 104, dass die Funktion für die Kollisionsvermeidung in die Verzögerung der mobilen Maschine eingegriffen hat.

In dem Schritt 105 und in dem Schritt 106 wird tatsächlich die Verzögerungsregelung stattfinden. Insbesondere wird als Führungsgröße die Soll-Verzögerung genommen und wird diese auf Basis einer Stellgröße geregelt, die zu einer Verzögerung der mobilen Maschine führen kann.

Die beabsichtigte Verzögerung der mobilen Maschine kann durch verschiedene Methoden erreicht werden. Daher ist die vorliegende Erfindung nicht auf eine spezifische Verzögerungsart limitiert. Eine Möglichkeit besteht in der Nutzung der hydrostatischen Verzögerung, bei der ein auf die hydraulischen Komponenten wirkender Widerstand erzeugt wird. Alternativ kann auch ein Bremseneingriff erfolgen, wodurch die kinetische Energie des Fahrzeugs in Wärme umgewandelt wird. Eine weitere Möglichkeit besteht in der elektromotorischen Verzögerung, die auch die Option einer Rekuperation bietet. Bei dieser Methode wird die Bewegungsenergie des Fahrzeugs in elektrische Energie umgewandelt und in einem Energiespeicher gespeichert, was zu einer verbesserten Energieeffizienz führen kann. Daher kann die Stellgröße einen Bremspedal-Wert darstellen oder auch ein Schwenkwinkel einer hydrostatischen Komponente eines hydrostatischen Antriebs sein.

Die Regelung soll dabei Stellgrößenbeschränkungen bzw. eine durchs Fahrzeug- und Bremssystem definierte, maximale Verzögerung berücksichtigen. Zur Verhinderung von Windup-Effekten können aus der Literatur bekannte Verfahren ("Anti-Windup") genutzt werden. Die Regelung wird dabei als Software-Algorithmus ausgeführt, z.B. in Form eines Proportional (P-) oder Proportional-Integral (PI) oder Proportional-Integral-Differential-Reglers (PID) ausgeführt. Ebenfalls denkbar sind komplexere, modellbasierten Regelungen wie z.B. modellprädiktive Regelungen, optimale oder robuste Regelungen, wie sie aus der regelungstechnischen Literatur und Praxis bekannt sind.

Es wird darauf hingewiesen, dass für die Regelung die Erfassung der tatsächlichen Beschleunigung auf verschiedene Weisen erfolgen kann:
I. Direkte Messung mittels Inertial- oder Beschleunigungssensorik, auch als IMU (Inertial Measurement Unit) oder Accelerometer bekannt. Bei Bedarf ist eine entsprechende Tiefpassfilterung 106 des Signals erforderlich, um Rauscheffekte auszugleichen. Durch die direkte Erfassung der Fahrzeuglängsbeschleunigung wird der Einfluss von Radschlupf kompensiert.
II. Numerische Ableitung eines bereits vorhandenen Geschwindigkeitssignals. Oft liegt die Längsgeschwindigkeit bereits im Fahrzeug-Bus-System vor, beispielsweise durch die Messung der Abtriebsdrehzahl am Rad, der Antriebswelle oder dem Hydromotor bei hydrostatischen Fahrantrieben. Bei diesem Ansatz wird jedoch ein möglicher Schlupf am Rad nicht berücksichtigt.
III. Erfassung der Fahrzeugbewegung mittels (Differential-)GPS. Dies ermöglicht auch eine Reduzierung der Schlupfeffekte am Rad.

Um unnötige Schwankungen zu vermeiden, wird die Regelung vorzugsweise nur aufgeführt, falls die Abweichung zwischen Ist- und Soll-Verzögerung einen bestimmten Schwellenwert überschreitet.

Eine Ausführungsform integriert die Regelung mit einer Vorsteuerung, welche auch als sogenannte 2-Freiheitsgrade-Regelung bezeichnet wird. In diesem Ansatz wird das Stellsignal durch die Regelung entsprechend der Vorsteuerung modifiziert, indem es verkleinert oder vergrößert wird. Dies ermöglicht die Anwendung der Regelung, beispielsweise eines PI-Reglers, auf ein durch die Vorsteuerung linearisiertes Verhalten des Systems. Als Ergebnis wird die Präzision und Dynamik der Regelung verbessert.

Es wird nun mit dem Bezug eine zweite Ausführungsform dargestellt. Da die zweite Ausführungsform sehr ähnlich zu der ersten Ausführungsform ist, wird auf eine detaillierte Beschreibung der zweiten Ausführungsform verzichtet, um Wiederholungen zu vermeiden.

Der Hauptunterschied gegenüber der ersten Ausführungsform ist, dass in dieser zweiten Ausführungsform eine Steuerung der Verzögerung der mobilen Maschine statt einer Regelung stattfindet. Insbesondere wird in dem Schritt 107 die Steuerung der Verzögerung ausgeführt. Um das Ziel dieser Erfindung zu erreichen, wird nach einer bestimmten Zeit (z.B. mindestens nach einer Sekunde) auf Basis der Umfeldsensordaten und auf Basis der eigenen Bewegung die Soll-Verzögerung neu berechnet 108 und dann wird die Steuerung auf Basis dieser neuen berechneten Soll-Verzögerung ausgeführt.

Alternativ zu dieser Ausführungsform kann die Steuerung so erfolgen, dass die Ist-Verzögerung kontinuierlich ermittelt wird, um das Ist-Verhalten mit dem Sollverhalten zu vergleichen, aber ohne aktiv etwas zu regeln. Nach einer bestimmten Zeit werden dann die Unterschiede addiert und dann wird ermittelt, ob und wie eine Anpassung der Steuerung der Verzögerung ,d.h. eine Anpassung der Soll-Verzögerung, stattfinden soll.

Alle diese Ideen haben gemeinsam, dass es immer eine Ermittlung (z.B. Erfassung) eines Ist-Wertes mindestens einer physikalischen Größe gibt.

Das beschriebene Verfahren ist in einer Speichereinheit abgelegt und wird durch die Steuereinheit 18 ausgeführt. Die vorliegende Erfindung umfasst weiterhin ein Computerprogramm, das eine Recheneinheit veranlasst, das beschriebene Verfahren durchzuführen, wenn es auf der Recheneinheit ausgeführt wird. Darüber hinaus wird ein maschinenlesbares Speichermedium mit dem darauf gespeicherten Computerprogramm offenbart.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Darüber hinaus wurden die Bereiche, auf denen Fachleute kundig sein dürften, hier nicht beschrieben, um die beschriebene Erfindung nicht unnötig zu verschleiern. Dementsprechend soll die Erfindung nicht durch die spezifischen veranschaulichenden Ausführungsformen beschränkt sein, sondern durch den Schutzbereich der beigefügten Ansprüche.

## Patentansprüche

1. Verfahren zur Vermeidung einer Kollision der mobilen Maschine mit einem externen Objekt (99), wobei die mobile Maschine mindestens einen ersten Umfeldsensor (S1) umfasst, der auf einer mobilen Maschine (1) positioniert ist und der für die Funktion für die Vermeidung einer Kollision der mobilen Maschine mit einem externen Objekt (99) angewendet wird, wobei das Verfahren folgende Schritte umfasst:
a. Ermittlung einer Relativposition zwischen der mobilen Maschine und dem Objekt (99) mindestens aus einer Information des ersten Umfeldsensors (1);
b. Ermittlung einer Relativbewegung zwischen der mobilen Maschine und dem Objekt (99);
c. Feststellen auf Basis der Ermittlungen vom Schritt a. und b., dass die Funktion für die Vermeidung einer Kollision in die Steuerung der Bewegung der mobilen Maschine eingreifen soll;
d. Berechnung einer Soll-Verzögerung der mobilen Maschine auf Basis der im Schritt a. ermittelten Relativposition und der im Schritt b. ermittelten Relativbewegung;
e. Steuern oder Regeln der Verzögerung der mobilen Maschine auf Basis der im Schritt d. berechnetet Soll-Verzögerung;
f. Erfassen eines Ist-Wertes mindestens einer physikalischen Größe, der sich wegen der Steuerung oder Regelung vom Schritt e. verändert hat;
g. Anpassung der Steuerung der mobilen Maschine oder der Regelung der mobilen Maschine auf Basis des im Schritt f. erfassten Ist-Wertes.

2. Verfahren nach Anspruch 1, wobei in dem Schritt e. eine Regelung der Soll-Verzögerung der mobilen Maschine stattfindet und als Konsequenz im Schritt e. die physikalische Größe eine Ist-Verzögerung ist.

3. Verfahren nach Anspruch 2, wobei die Anpassung vom Schritt f. nur ausgeführt wird, falls die Abweichung zwischen Ist- und Soll-Verzögerung einen bestimmten Schwellenwert überschreitet.

4. Verfahren nach einem der Ansprüche 2 oder 3, wobei die Regelung vom Schritt e. als Software-Algorithmus ausgeführt wird, wobei der Software-Algorithmus vorzugsweise die Form eines Proportional- (P-) oder Proportional-Integral- (PI) oder Proportional-Integral-Differential-Reglers (PID) aufweist.

5. Verfahren nach einem der Ansprüche 2 bis 4, wobei die genannte Regelung mit einer Vorsteuerung kombiniert wird, sodass die Regelung das Stellsignal gemäß Vorsteuerung modifiziert, um eine Regelung für ein durch die Vorsteuerung linearisiertes Streckenverhalten zu ermöglichen.

6. Verfahren nach Anspruch 1, wobei ein Zeitabstand zwischen dem Schritt e. und dem Schritt f. vorgesehen ist, wobei der Zeitabstand mindestens eine Sekunde beträgt.

7. Verfahren nach Anspruch 6, wobei bei der Anpassung der Steuerung der mobilen Maschine eine neue Soll-Verzögerung auf Basis des im Schritt e. erfassten Ist-Wertes berechnet wird, der dann bei der Steuerung der Verzögerung der mobilen Maschine angewendet wird.

8. Verfahren nach Anspruch 7, wobei der Ist-Wert eine Relativposition zwischen der mobilen Maschine und dem Objekt (99) und/oder Relativbewegung zwischen der mobilen Maschine und dem Objekt (99) und/oder eine aktuelle Verzögerung der mobilen Maschine darstellt.

9. Verfahren nach einem der Ansprüche 1 bis 8, wobei die Steuerung oder die Regelung der Verzögerung der mobilen Maschine durch eine hydrostatische Verzögerung und/oder einen mechanischen Bremseingriff und/oder eine elektromotorische Verzögerung erfolgen kann.

10. Recheneinheit, die dazu eingerichtet ist, ein Verfahren nach einem der vorstehenden Ansprüche durchzuführen.

11. Mobile Arbeitsmaschine (1), die konfiguriert ist, Lasten aufzunehmen, wobei Umfeldsensoren vorgesehen sind, die eingerichtet sind, ein Umfeld der mobilen Arbeitsmaschine zu beobachten; aufweisend eine Recheneinheit nach Anspruch 10.

12. Computerprogramm, das eine Recheneinheit veranlasst, ein Verfahren nach einem der Ansprüche 1 bis 9 durchzuführen, wenn es auf der Recheneinheit ausgeführt wird.

13. Maschinenlesbares Speichermedium mit einem darauf gespeicherten Computerprogramm nach Anspruch 12.
